Europäisches Patentamt

European Patent Office

Office européen des brevets

(11) Numéro de publication: **0 267 634 B1**

# FASCICULE DE BREVET EUROPEEN

(45) Date de publication de fascicule du brevet: **03.06.92**   (51) Int. Cl.⁵: **G01J 3/02**, G01N 21/21

(21) Numéro de dépôt: **87201918.7**

(22) Date de dépôt: **07.10.87**

(54) **Dispositif optique d'éclairement d'un échantillon pour un éllipsomètre spectroscopique à haute résolution latérale.**

(30) Priorité: **10.10.86 FR 8614123**

(43) Date de publication de la demande:
**18.05.88 Bulletin 88/20**

(45) Mention de la délivrance du brevet:
**03.06.92 Bulletin 92/23**

(84) Etats contractants désignés:
**DE FR GB IT NL**

(56) Documents cités:
**US-A- 3 521 957**
**US-A- 3 606 547**

**JOURNAL OF APPLIED PHYSICS, vol. 60, no. 3, 1er août 1986, pages 859-873, American Institute of Physics, Woodbury, New York, US; M. ERMAN et al.: "Spatially resolved ellipsometry"**

**APPLIED OPTICS, vol. 12, no. 10, octobre 1973, pages 2454-2460, New York, US; R.S. HERNICZ et al.: "Evaluation of a high accuracy reflectometer for specular materials"**

(73) Titulaire: **LABORATOIRES D'ELECTRONIOUE PHILIPS**
**3, Avenue Descartes**
**F-94450 Limeil-Brévannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB IT NL**

(72) Inventeur: **Erman, Marko Société Civile S.P.I.D.**
**209, rue de l'Université**
**F-75007 Paris(FR)**
Inventeur: **Hily, Claude Société Civile S.P.I.D.**
**209, rue de l'Université**
**F-75007 Paris(FR)**
Inventeur: **Le Bris, Jean Société Civile S.P.I.D.**
**209, rue de l'Université**
**F-75007 Paris(FR)**

Rank Xerox (UK) Business Services

ANALYTICAL CHEMISTRY, vol. 50, no. 12, octobre 1978, pages 1714-1716, Am. Chem. Soc., Columbus, Ohio, US; S.G. SALMON et al.: "Off-axis imaging for improved resolution and spectral intensities"

(74) Mandataire: **Charpail, François et al**
**Société Civile S.P.I.D. 156, Boulevard Haussmann**
**F-75008 Paris(FR)**

**Description**

La présente invention a pour objet un dispositif optique d'éclairement d'un échantillon pour un ellipsomètre spectroscopique du type à analyseur tournant, et comportant un monochromateur présentant une fente de sortie dont l'image est conjuguée avec une surface de l'échantillon par au moins un premier miroir sphérique, et comportant un polariseur disposé entre ledit miroir sphérique et l'échantillon.

Un tel dispositif, qui est connu de l'article "High Precision Scanning Ellipsometer" de D.E.ASPNES et al. paru dans la revue Applied Optics en janvier 1975, convient à la mise en oeuvre de l'ellipsométrie classique, laquelle opère en ondes planes avec une grande sensibilité à l'état de surface de l'échantillon, mais avec une faible résolution latérale.

Dans l'article précité, l'ouverture angulaire du faisceau éclairant l'échantillon ne dépase pas 1°. Cete faible valeur permet de considérer que la mesure a lieu en ondes planes.

On connaît par ailleurs de l'article "Geometrical Resolution in the Comparison Ellipsometer" de STIBLERT et al. paru dans le Journal de Physique (Colloque C10, supplément au n °12, tome 44, décembre 1983), un ellipsomètre par comparaison présentant à la fois une bonne sensibilité à l'état de surface de l'échantillon et une résolution latérale élevée, de l'ordre de 2 $\mu$m, correspondant à la dimension de la tache qui éclaire l'échantillon en lumière convergente. Cependant, si la sensibilité à l'état de surface est conditionnée par la présence d'ondes planes présentant un état défini de polarisation, la résolution latérale ne peut quant à elle être obtenue que par un système optique de focalisation qui contredit à la fois les concepts d'onde plane et d'angle d'incidence unique. Dans l'article précité, la résolution latérale de l'ordre de 2 $\mu$m est obtenue au prix d'une résolution en profondeur peu satisfaisante.

L'analyse de la perturbation des mesures due à la mise en oeuvre de rayons convergents a permis à la Demanderesse de calculer un compromis aboutissant à la conception d'un ellipsomètre du type à analyseur tournant présentant une bonne précision pour les deux paramètres précités. Ce compromis consiste à choisir une résolution latérale de l'ordre de 10 x 10 $\mu$m avec une ouverture angulaire du faisceau incident de l'ordre de 4 à 5 degrés, ce qui permet de conserver une sensibilité à l'état de surface meilleure que l'Angström.

Pour de telles valeurs de l'ouverture angulaire, l'onde ne pouvant plus être considérée comme plane, l'interprétation des résultats nécessite un nouveau formalisme de calcul.

En ellipsométrie classique, on mesure le rapport de réflectance complexe $\rho$ :

$$\rho = R_p R_s^{-1} = \tan \phi \exp(i\Delta) \qquad (1)$$

$R_p$ et $R_s$ désignant les coefficients de réflexion d'ondes polarisées linéairement ayant leur polarisation respectivement parallèle et perpendiculaire au plan d'incidence.

Un ellipsomètre à analyseur tournant permet de mesurer directement $\tan \phi$ et $\cos \Delta$. Il vient :

$$\tan \Psi = \left|\left|\frac{R_p}{R_s}\right|\right| \qquad (2)$$

$$\cos \Delta = \frac{R_e \ (R_p \cdot \bar{R}_s)}{||(R_p \cdot R_s)||} \qquad (3)$$

$R_e$ étant la partie réelle d'un nombre complexe.

Dans le cas d'une onde non plane, il faut tenir compte notamment du fait que les coefficients $R_p$ et $R_s$ dépendent de l'angle d'incidence $\theta$. On décompose le faisceau lumineux incident en une somme d'ondes planes et on désigne par g la transformée de fourier de sa distribution et par g' celle du faisceau réfléchi et collecté.

Il vient alors en lumière cohérente et pour un échantillon homogène, le signe * désignant un produit de convolution :

$$\tan \Psi = \frac{||[R_p(\theta) * g.g'(\theta)](\theta_0)||}{||[R_s(\theta) * g.g'(\theta)](\theta_0)||} \qquad (4)$$

3

avec $\theta_o$ = angle d'incidence moyenne.
et

$$\cos \Delta = \frac{R_e[R_p(\theta) \ast g.g'(\theta).(\bar{R}_s(\theta) \ast \bar{g}.\bar{g}'(\theta)](\theta_O)}{||R_p(\theta) \ast g.g'(\theta)|| \cdot ||R_s(\theta) \quad g.g'(\theta)||(\theta_O)} \qquad (5)$$

Les formules se déduisent donc des précédentes en remplaçant tous les coefficients de réflexion par leur produit de convolution avec la fonction g.g'($\theta$).

En lumière incohérente et pour un échantillon homogène, les formules deviennent :

$$\tan \Psi = \left(\frac{||R_p(\theta)||^2 \ast ||g.g'(\theta)||^2(\theta_O)}{||R_s(\theta)||^2 \ast ||g.g'(\theta)||^2(\theta_O)}\right)^{\frac{1}{2}} \qquad (6)$$

$$\cos \Delta = \frac{R_e(R_p(\theta).\bar{R}_s(\theta) \ast ||g.g'(\theta)||^2)(\theta_O)}{(A.B)^{\frac{1}{2}}} \qquad (7)$$

$$\text{avec } A = ||R_p(\theta)||^2 \ast ||g.g'(\theta)||^2(\theta_O)$$

$$B = ||R_s(\theta)||^2 \ast ||g.g'(\theta)||^2(\theta_O)$$

On remarquera que, dans le cas d'une onde plane, g = g' = 1 pour $\theta = \theta_o$ et 0 pour $\theta \# \theta_o$, et les formules (4) et (6) d'une part et (5) et (7) d'autre part se réduisent bien entendu aux formules (2) et (3).

L'ellipsométrie spectroscopique impose de couvrir une vaste gamme spectrale, ce qui conduit à la mise en oeuvre d'une focalisation de type catadioptrique. En pratique, on est conduit à utiliser une optique à miroirs sphériques, éclairés en incidence oblique et présentant de ce fait un astigmatisme important. En raison de cet astigmatisme, la solution de l'art antérieur consistant simplement à conjuguer à travers le système optique la fente du monochromateur et un point de la surface de l'échantillon n'est pas utilisable pour former une image convergente sur l'échantillon.

Pour remédier à cet inconvénient, le dispositif optique d'éclairement selon l'invention est caractérisé en ce qu'il comporte également un deuxième miroir sphérique ainsi qu'une fente de correction d'astigmatisme disposée au voisinage du conjugué de la fente du monochromateur par rapport au premier miroir sphérique et perpendiculairement à celui-ci et qu trajet optique, de manière à être conjugué avec l'échantillon à travers le deuxième miroir sphérique, de telle sorte que l'on obtienne sur la surface de l'échantillon une tache lumineuse corrigée des défauts d'astigmatisme.

Selon un mode de réalisation avantageux permettant de replier le faisceau optique, un premier miroir de renvoi est disposé sur le trajet optique entre la fente du monochromateur et le premier miroir sphérique, et un deuxième miroir de renvoi sur le trajet optique entre le deuxième miroir sphérique et l'échantillon.

Selon un mode de réalisation préféré, le dispositif optique est tel que la tache lumineuse est un carré dont le côté a une longueur de l'ordre de 10 microns, l'ouverture angulaire du faisceau lumineux étant de l'ordre de 4 à 5 degrés.

L'invention sera mieux comprise à la lecture de la description qui va suivre à titre d'exemple non limitatif en liaison avec les figures qui représentent :
  - la figure 1, les composantes d'un champ incident et réfléchi sur une surface plane,
  - la figure 2, un monochromateur utilisable dans un ellipsomètre selon l'invention,
  - la figure 3, un bras d'éclairement selon l'invention,
  - la figure 4, un porte-échantillon utilisable dans un ellipsomètre selon l'invention et conçu de manière à permettre la réalisation de cartographies,
  - et la figure 5, un bras d'analyse comportant le porte-échantillon et un système de détection.

L'elllipsométrie est une méthode optique de caractérisation qui est habituellement utilisée en réflexion, en incidence oblique. Contrairement à une mesure de réflectivité, elle ne mesure pas la valeur absolue d'une intensité, mais cherche à déterminer un état de polarisation de la lumière. La réponse du gaz d'électrons est en effet différente selon que le vecteur champ électrique de l'onde incidente est parallèle ou orthogonal au plan d'incidence.

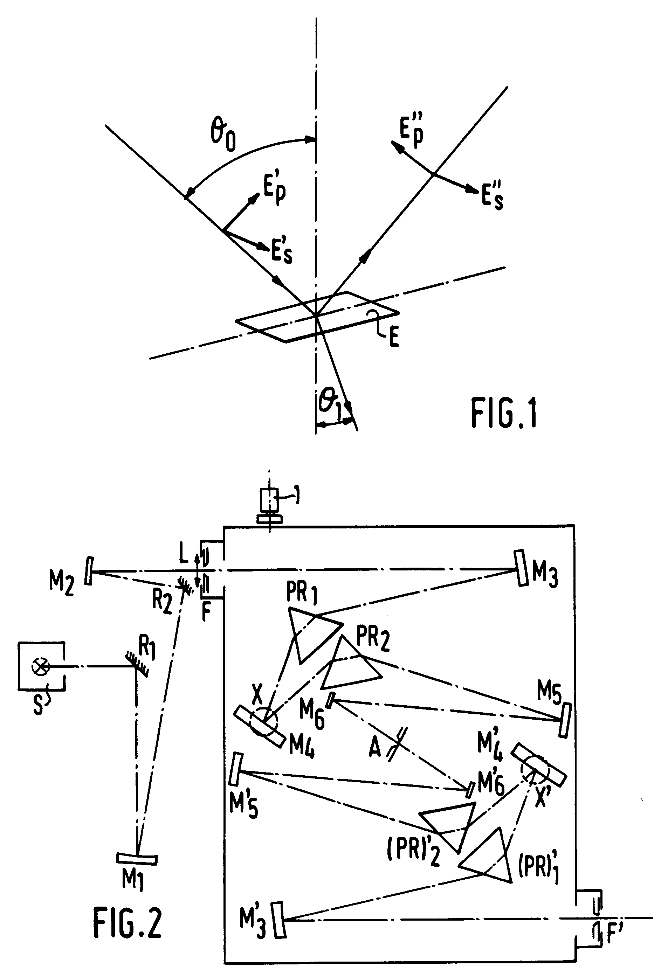

Une onde plane de polarisation $E'_p$ parallèle au plan d'incidence et formant un angle $\theta_o$ avec la normale à la surface d'un échantillon (figure 1) est réfléchie sous la forme d'une onde présentant une polarisation $E''_p$ ayant subi une rotation de $\delta_p$ par rapport à l'onde incidente. De même, une onde plane de polarisation $E'_s$ perpendiculaire au plan d'incidence est réfléchie sous la forme d'une onde présentant une polarisation $E''_s$ ayant subi une rotation $\delta_s$ par rapport à l'onde incidente.

Les coefficients $R_p$ et $R_s$, voir formule (1), sont définis par les rapports :

$$R_p = \frac{E''_p}{E'_p} = |R_p| \, e^{i\delta_p}$$

$$R_s = \frac{E''_s}{E'_s} = |R_s| \, e^{i\delta_s}$$

Les coefficients étant, pour un échantillon homogène, les coefficients de Fresnel, il en résulte que $\rho$ est fonction de l'angle d'incidence ainsi que des propriétés optiques de l'échantillon et donc de la longueur d'onde. Dans le cas d'un échantillon non homogène, pouvant être représenté par une structure stratifiée, $\rho$ est fonction des propriétés optiques de chaque couche et de leurs épaisseurs. Dans le cas d'un échantillon spatialement non homogène, $\vartheta$ est de plus fonction des coordonnées latérales de l'échantillon. Ces considérations montrent que le nombre de paramètres inconnus peut devenir rapidement très important.

En général, une mesure ellipsométrique à longueur d'onde fixe ne permet pas une analyse assez fine de l'échantillon. Il est donc intéressant d'utiliser un autre paramètre, et dans le cas d'espèce, il s'agit de la longueur d'onde. Il s'agit donc d'ellipsométrie spectroscopique.

La figure 2 décrit un monochromateur à prismes présentant une résolution spectrale élevée et convenant particulièrement à l'application envisagée. Il comporte comme source lumineuse S une lampe au Xénon de 900 W. Une telle lampe présente outre une bonne stabilité, un fond continu intense dans une large gamme allant de l'infrarouge (quelques $\mu$m) jusqu'à l'ultraviolet (environ 0,22 $\mu$m).

La fente d'entrée F du monochromateur est éclairée par un montage optique du type KOHLER. Ce montage permet d'obtenir un éclairement uniforme. Il comporte deux miroirs sphériques $M_1$ et $M_2$. le premier miroir $M_1$ projette l'image de l'arc de la source S sur le miroir $M_2$. Ce dernier conjugue le miroir $M_1$ sur la fente d'entrée F du monochromateur. Deux miroirs plans $R_1$ et $R_2$ permettent de conserver un angle d'incidence faible (environ 5°) sur les miroirs sphériques $M_1$ et $M_2$. Une lentille L, placée contre la fente d'entrée F permet de projeter l'image de l'arc formée sur le miroir $M_2$ au voisinage de l'infini dans le monochromateur.

Les éléments dispersifs utilisés sont constitués par quatre prismes doubles en quartz naturel $PR_1$, $PR_2$, $PR'_2$, $PR'_1$. Ce montage est équivalent à deux monochromateurs simples ($PR_1$,$PR_2$) et ($PR'_1$,$PR'_2$) disposés de manière symétrique par rapport à une fente centrale A. Des miroirs concaves, $M_3$ en amont du prisme $PR_1$ et $M_5$ en aval du prisme $PR_2$ pour le premier monochromateur simple, et $M'_5$ en amont du prisme $PR'_2$ et $M'_3$ en aval du prisme $PR'_1$ pour le deuxième monochromateur simple, constituent deux montages dits en Z à angles d'incidence égaux. Le montage permet de conjuguer la fente d'entrée F, la fente centrale A et la fente de sortie F'. La sélection de la longueur d'onde est réalisée grâce à deux miroirs plans respectivement $M_4$ disposé en aval du prisme $PR_1$ et an amont du prisme $PR_2$, et $M'_4$ disposé en aval du prisme $PR'_2$ et en amont du prisme $PR'_1$. Un moteur pas à pas 1 entraîne en rotation simultanée les miroirs $M_4$ et $M'_4$ par l'intermédiaire d'une démultiplication mécanique. Le moteur pas à pas 1 est commandé par un ordinateur suivant une loi de calibration précise permettant une linéarisation de la commande de longueur d'onde.

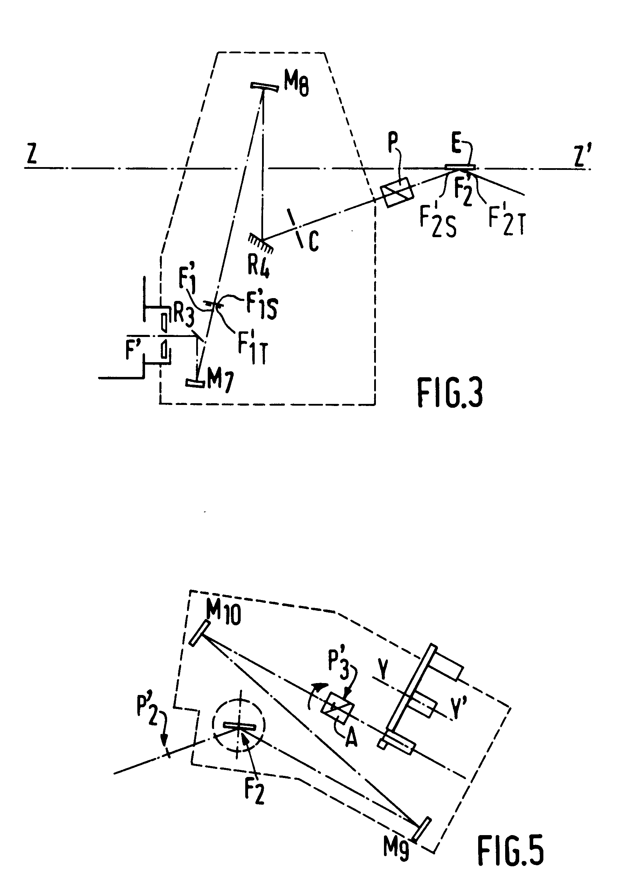

La figure 3 représente le bras optique d'éclairement, dont la fonction est, selon l'invention, de former sur la surface de l'échantillon une tache de faibles dimensions, par exemple de l'ordre de 10 $\mu$m. Du fait que l'ellipsomètre est du type spectroscopique, on utilise un dispositif mettant en oeuvre des miroirs sphériques. Comme les miroirs sphériques sont utilisés en incidence oblique, ils présentent un astigmatisme important . Les distances focales sagittale et tangentielle sont différentes. Si on utilise un montage optique conjuguant simplement la fente de sortie F' du monochromateur et un point $R'_2$ de la surface de l'échantillon, on obtient une image qui n'est pas au point en raison de l'astigmatisme des miroirs sphériques. La correction des effets dûs à l'astigmatisme est réalisée conformément à la figure 3. Celle-ci met en oeuvre deux miroirs sphériques $M_7$ et $M_8$, le miroir $M_7$ ayant pour fonction de former deux images intermédiaires $F'_{1T}$ et $R'_{1S}$ de la fente de sortie F' du monochromateur. L'image $F'_{1S}$ est reprise par le second miroir $M_8$ réglable qui la conjugue en deux images $F'_{2S}$ et $F'_{2T}$ respectivement en amont et en aval

de F'$_2$ et au voisinage proche de F'$_2$ avec la surface de l'échantillon. Une deuxième fente est située dans le plan de l'image F'$_{1S}$ et disposée perpendiculairement à celle-ci.

L'écartement controlé de ces deux fentes précitées permet de corriger les effets dûs à l'astigmatisme. Des miroirs plans de renvoi R$_3$ et R$_4$ permettent de replier le faisceau. L'encombrement de l'ensemble est en outre réduit en choisissant pour les miroirs M$_7$ et M$_8$ des distances focales telles que le système optique travaille en grandissement 2, ce qui permet en outre de disposer le polariseur fixe P à une distance convenable de l'échantillon, pour laquelle la section du faisceau lumineux correspond à celle du polariseur P.

Le polariseur fixe P est en calcite et est solidaire d'une commande de calibration constituée par un moteur pas à pas et permettant d'orienter le polariseur P préalablement à une mesure avec une précision d'un centième de degré. Sur le montage, a été également représenté un obturatuer électronique C, situé entre le miroir de renvoi R$_4$ et le polariseur P. Cet obturateur C permet, lorsqu'il est en position fermée, de soustraire au signal ellipsométrique la composante continue, par exemple celle due au courant d'obscurité du détecteur.

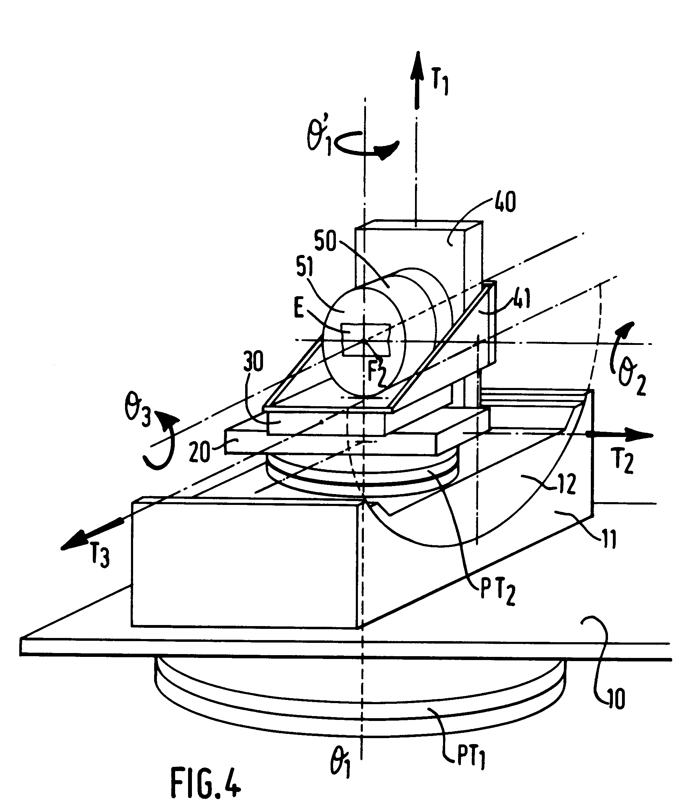

Selon la figure 4, le porte-échantillon présente deux degrés de liberté de rotation autour des axes $\theta_1$, $\theta_2$ et de préférence un troisième degré de liberté autour de l'axe $\theta_3$ et trois degrés de liberté de translation selon les axes T$_1$, T$_2$ et T$_3$.

Le premier degré de liberté de rotation est obtenu grâce à deux mouvements rotatifs coaxiaux. Le premier mouvement rotatif autour de l'axe $\theta_1$ qui passe par le point focal F'$_2$ est assuré par une platine tournante PT$_1$ commandée par une vis micrométrique non représentée. La platine PT$_1$ est solidaire d'une plaque 10 qui supporte à la fois le porte-échantillon proprement dit et le bras d'analyse qui sera décrit plus loin (figure 5). La rotation de la platine PT$_1$ permet de choisir l'angle d'incidence d'une manière qui sera décrite par la suite.

Une seconde platine tournante PT$_2$ tournant autour de l'axe $\theta'_1$ qui coïncide avec l'axe $\theta_1$ en position de réglage permet d'orienter l'échantillon sans changer l'angle d'incidence déterminé par la position de la première platine PT$_1$.

La seconde rotation autour d'un axe horizontal $\theta_2$ est obtenue avec une précision également du centième de degré par le déplacement d'un berceau goniométrique 12 tournant dans un support 11 monté sur la plaque 10.

L'axe $\theta_2$ coupe l'axe $\theta_1$ au point focal F'$_2$. Ceci a entre autres pour conséquence que l'axe $\theta'_1$ passe toujours par le point focal F'$_2$.

Le berceau goniométrique 11 porte la deuxième platine PT$_2$ qui elle-même porte le reste de l'appareillage assurant les trois translations selon les axes T$_1$, T$_2$, T$_3$ et la rotation autour de l'axe $\theta_3$. La translation selon l'axe T$_2$ parallèle à l'axe $\theta_2$ est assurée par une platine de translation 20 montée sur la platine tournante PT$_2$. La translation selon l'axe T$_3$ perpendiculaire à l'axe T$_2$ et à l'axe $\theta'_1$ est assurée par une platine de translation 30 montée sur la platine de translation 20. Enfin, la translation selon l'axe T$_1$ parallèle à l'axe $\theta'_1$ est assurée par une platine de translation 40 montée sur la platine de translation 30 par l'intermédiaire d'un étrier 41 et portant une platine tournante 50 d'axe $\theta_3$ parallèle à l'axe T$_3$. L'échantillon est fixé sur la face avant 51 de la platine tournante 50 dont la rotation permet de faire tourner l'échantillon sur lui-même. Ceci permet de présenter selon une orientation désirée un échantillon présentant des directions privilégiées (lignes de métallisation, etc...).

Les translations T$_1$ et T$_2$ assurées par des moteurs pas à pas avec un incrément de 0,1 $\mu$m permettent de réaliser une cartographie de l'échantillon, une fois que la surface de l'échantillon a été amenée en coïncidence avec le point focal F'$_2$ par action sur la translation T$_3$. L'action des translations T$_1$ et T$_2$ ne défait pas la mise au point. De même, le fait que les axes $\theta'_1$, $\theta_2$ passent par le point focal F'$_2$ a pour conséquence que le point de la surface de l'échantillon coïncidant avec F'$_2$ reste invariant quels que soient les réglages des trois rotations $\theta'_1$, $\theta_2$ et $\theta_3$.

Selon la figure 5, le bras d'analyse solidaire de la plaque mobile pouvant pivoter dans son plan autour de l'axe $\theta_1$ (platine PT$_1$) permet de modifier l'angle d'incidence mais également de mettre l'ellipsomètre en configuration "ligne droite" dans laquelle il n'y a plus de réflexion sur l'échantillon. Ceci permet d'aligner l'ensemble du système optique ainsi que de prendre la référence pour la mesure de l'angle d'incidence. Le bras d'analyse comporte le porte-échantillon ainsi qu'un système de détection comprenant une optique de détection comportant deux miroirs sphériques M$_9$ et M$_{10}$, ici de focale identique, montés en Z, un analyseur tournant, et une tourelle munie de différents détecteurs, d'un laser d'alignement et d'un microscope de visée.

Le miroir M$_9$ reprend le faisceau lumineux réfléchi par l'échantillon et le renvoie sur le miroir M$_{10}$ pour focalisation sur les détecteurs de la tourelle après passage à travers l'analyseur tournant A. L'angle d'incidence sur les miroirs M$_9$ et M$_{10}$ a été choisi aussi petit que possible, dans le cas d'espèce environ 6

6

degrés, afin de ne pas perturber la polarisation de la lumière réfléchie.

L'analyseur tournant A est en calcite et est monté dans l'arbre creux d'un moteur à courant continu. Un codeur optique est solidaire de l'axe du moteur.

La tourelle est mobile en rotation autour d'une axe YY′ de manière à permettre de placer sur le trajet optique les différents détecteurs qu'elle porte, et couvrant différentes gammes spectrales, ainsi que le laser d'alignement et le microscope de visée. Les détecteurs sont placés légèrement en retrait du plan focal de manière à assurer un éclairement uniforme de chaque détecteur, à l'exception éventuelle des détecteurs dont la surface sensible est de faibles dimensions et qui peuvent être mis au plan focal.

Le microscope de visée, à faible grossissement, permet l'observation de l'échantillon à travers le système optique d'analyse, ainsi que le réglage de la position du miroir $M_8$ et de la fente $F'_1$ du bras optique d'éclairement.

Le laser d'alignement, ici un laser He-Ne, permet d'aligner l'ensemble des pièces optiques y compris le porte-échantillon.

Le signal I fourni par le détecteur est sinusoïdal, de fréquence double de celle de l'analyseur tournant. Si on désigne par A l'angle de l'analyseur tournant par rapport à l'axe p et par P l'angle du polariseur par rapport à l'axe p, on a :

$$I = k(1 + \alpha_0 \cos 2A + \beta_0 \sin 2A)$$

avec

$$\alpha_0 = \frac{\tan^2\Psi - \tan^2P}{\tan^2\Psi + \tan^2P}$$

$$\beta_0 = \frac{2\tan\Psi \ \tan P \ \cos\Delta}{\tan^2\Psi + \tan^2P}$$

$\alpha_0$ et $\beta_0$ étant les coefficients de Fourier normalisés.

D'où il résulte :

$$\tan\Psi = \tan P \left(\frac{1+\alpha_0}{1-\alpha_0}\right)^{\frac{1}{2}}$$

$$\cos\Delta = \frac{\beta_0}{(1-\alpha^2_0)^{\frac{1}{2}}}$$

Ces deux dernières équations montrent que les mesures ellipsométriques peuvent en quelque sorte se résumer à des mesures d'angles. Pour que les mesures aient une bonne précision absolue, il importe que tous les angles, à savoir l'angle d'incidence, l'orientation du polariseur, et le repérage de la position de l'analyseur tournant soient correctement déterminés. L'orientation de l'échantillon est également importante, car elle détermine le plan d'incidence.

Nous allons maintenant décrire une procédure de calibration de l'ellipsomètre, le bras d'analyse, et donc le porte-échantillon étant mis en configuration dite de ligne droite. La première opération consiste à régler la position du miroir $M_8$ et de la fente $F'_1$ du bras optique d'éclairement à l'aide du microscope de visée. En l'absence d'échantillon, le faisceau du laser situé sur la tourelle passe directement, sans être réfléchi à travers le système optique en trajet inverse. La position du bras d'analyse repérée par la platine tournante $PT_1$ pour laquelle le faisceau du laser passe par le centre de tous les miroirs est prise comme référence pour la mesure de l'angle d'incidence. L'axe optique étant ainsi matérialisé par le faisceau laser, on agit sur les rotations suivant les axes $\theta'_1$ et $\theta_2$ du porte-échantillon de manière à obtenir un parallélisme parfait entre la surface de l'échantillon et le faisceau laser, c'est-à-dire la condition d'incidence rasante. On agit ensuite sur la translation selon l'axe $T_3$ de manière à obturer la moitié du faisceau laser. Ceci amène en coïncidence le point focal $F'_2$ du bras d'éclairement avec un point de la surface de l'échantillon. Comme une action sur les rotations selon les axes $\theta'_1$, $\theta_2$, $\theta_3$ (de même qu'une action sur les translations $T_1$ et $T_2$) ne change pas la position de l'échantillon le long de l'axe $T_3$, le réglage peut être encore emélioré une fois la mise au point réalisée.

Après ces réglages, le bras d'analyse peut être tourné et mis en position de mesure. La rotation de la

platine PT$_1$ étant mesurée avec une précision au centième de degré, l'angle d'incidence est alors déterminé avec précision.

Une orientation parfaite de la surface de l'échantillon peut être obtenue de préférence en étudiant le signal détecté en mettant le montage en configuration de mesure. L'analyseur tournant est mis en rotation avec une fréquence angulaire $\omega$. Le signal détecté est périodique de fréquence $2\omega$. Cependant, un positionnement incorrect de l'échantillon par rapport au plan d'incidence fait apparaître dans le signal des termes périodiques de fréquence $\omega$. On réalise donc l'alignement de l'échantillon en agissant sur les rotations $\theta'_1$ et $\theta_2$ de manière à éliminer la composante parasite de fréquence $\omega$. L'examen visuel du signal sur un oscilloscope en superposant deux périodes du signal de fréquence $2\omega$ permet de mettre facilement en évidence toute composante de fréquence $\omega$.

Les degrés de liberté restants ($\theta_3$, T$_1$, T$_2$) ne changent plus l'orientation du plan de l'échantillon. Ils permettent de choisir le point à mesurer sur l'échantillon (translations T$_1$ et T$_2$) et de réaliser des cartographies de celui-ci, et dans le cas d'un échantillon présentant des motifs, d'aligner ces derniers (rotation $\theta_3$) parallèlement à une direction donnée, par exemple la direction horizontale ou verticale.

On peut donc résumer la fonction des degrés de liberté du porte-échantillon de la manière suivante :
- la rotation $\theta_1$ permet de régler l'angle d'incidence
- les rotations $\theta'_1$ et $\theta_2$ permettent d'orienter l'échantillon par rapport au trajet optique, par rotation de l'échantillon dans deux plans orthogonaux autour du point focal F$'_2$.
- la rotation $\theta_3$ permet la rotation de l'échantillon dans son propre plan autour de l'axe passant par le point focal F$'_2$.
- les translations T$_1$ et T$_2$ assurent le choix du point de l'échantillon que l'on désire mesurer.
- la translation T$_3$ permet d'amener l'échantillon dans le plan du point focal F$'_2$, ceci permettant de tenir compte des épaisseurs des différents échantillons.

La mise en place de l'échantillon une fois effectuée, il reste à repérer la position angulaire du polariseur et de l'analyseur. Ceci peut être fait en minimisant le résiduel R défini par :

$$R = 1 - \eta^2(\alpha^2 + \beta^2)$$

dans lequel $\eta^2$ est un coefficient d'atténuation apporté par l'électronique de détection qui filtre le signal délivré par le détecteur.

Pour mesurer le résiduel, le polariseur est mis manuellement au voisinage de la position p, soit en p$_0$. On mesure la valeur du résiduel et la phase du signal en 2N + 1 points équidistants dans l'intervalle p$_0$-$\Delta$p$_0$, p$_0$ + $\Delta$p$_0$. La variation du résiduel autour de son minimum est approximée par une fonction parabolique dont les coefficients sont calculés par la méthode des moindres carrés.

Cette procédure permet de positionner le polariseur avec une précision de l'ordre de deux centièmes de degrés, et de déterminer tous les paramètres nécessaires pour pouvoir déduire à partir des coefficients de Fourier mesurés, les coefficients de Fourier corrigés de l'atténuation et du déphasage.

L'atténuation $\eta^2$ est déduite de la valeur minimale de R = 1-$\eta^2$. Cette valeur dépend de la constante de temps de l'amplificateur et de la bande passante du détecteur. Pour un photomultiplicateur, dont la bande passante est très large eu égard à la fréquence de modulation, une constante de temps de 0,1 ms et une fréquence de rotation de 20 Hz pour l'analyseur tournant, la valeur minimale de R vaut environ 0,004.

Pour mesurer le déphasage, il suffit de remarquer que lorsque le polariseur est en position p = 0, les valeurs de $\alpha$ et $\beta$ valent respectivement 1 et 0. La mesure des coefficients de Fourier $\alpha'$ et $\beta'$ pour p = 0 donnent la valeur du déphasage $\phi$ :

$$\tan\phi = \frac{\alpha'}{\beta'}$$

Pour effectuer des mesures, le polariseur est décalé d'un angle donné de la position p = 0 déterminée dans la phase de calibration.

## Revendications

**1.** Dispositif optique d'éclairement d'un échantillon (E) pour un ellipsomètre spectroscopique du type à analyseur tournant, le dispositif comportant un monochromateur présentant une fente de sortie (F') dont l'image est conjuguée avec une surface de l'échantillon par au moins un premier miroir sphérique (M$_7$), et comportant un polariseur (P) disposé entre ledit miroir sphérique et l'échantillon, caractérisé en ce que, pour réaliser ladite conjugaison il comporte également un deuxième miroir sphérique (M$_8$) ainsi qu'une fente (F$'_1$) de correction d'astigmatisme disposée au voisinage du conjugué de la fente de sortie du monochromateur par rapport au premier miroir sphérique (M$_7$) et perpendiculairement à celui-ci et au trajet optique, de manière à être conjuguée avec l'échantillon (E) à travers le deuxième miroir sphérique (M$_8$), de telle sorte que l'on obtienne sur la surface de l'échantillon (E) une tache lumineuse corrigée des défauts d'astigmatisme.

**2.** Dispositif selon la revendication 1, caractérisé en ce qu'il comporte un premier miroir de renvoi (R$_3$) disposé sur le trajet optique entre la fente du monochromateur et le premier miroir sphérique, et un deuxième miroir de renvoi (R$_4$) sur le trajet optique entre le deuxième miroir sphérique (M$_8$ et l'échantillon.

**Claims**

**1.** An optical sample (E) illumination device for a spectroscopic elllipsometer of the rotating analyzer type, the device comprising a monochromator having an exit slit (F') whose image is conjugated with a surface of the sample by at least a first spherical mirror (M$_7$), and comprising a polarizer (P) arranged between said spherical mirror and the sample, characterized in that for realizing said conjugation the device also comprises a second spherical mirror (M$_8$) as well as an astigmatism correction slit (F'$_1$) arranged in the proximity of the conjugated image of the exit slit of the monochromator relative to the first spherical mirror (M$_7$) and arranged perpendicularly thereto and to the optical path so as to be conjugated with the sample (E) through the second spherical mirror (M$_8$) resulting in a luminous spot corrected for astigmatic errors being obtained on the surface of the sample (E).

**2.** A device as claimed in Claim 1, characterized in that it comprises a first reflective mirror (R$_3$) arranged in the optical path between the slit of the monochromator and the first spherical mirror, and a second reflective minor (R$_4$) arranged in the optical path between the second spherical minor (M$_8$) and the sample.

**Patentansprüche**

**1.** Optische Vorrichtung zur Beleuchtung einer Probe (E) für ein Spektral-Drehanalysator-Ellipsometer, wobei die Vorrichtung einen Monochromator mit einem Ausgangsspalt (F') enthält, dessen Bild einer Oberfläche der Probe mittels mindestens eines ersten sphärischen Spiegels (M$_7$) zugeordnet ist; und einen zwischen dem sphärischen Spiegel und der Probe liegenden Polarisator (P), dadurch gekennzeichnet, daß sie zur Verwirklichung der genannten Zuordnung auch einen zweiten sphärischen Spiegel (M$_8$) enthält, sowie einen Spalt (F'1) zur Astigmatismuskorrektur, welcher Spalt im optischen Weg in der Nähe des von dem ersten sphärischen Spiegel (M$_7$) erzeugten Bildes des Ausgangsspalts des Monochromators und senkrecht zu diesem liegt, in der Weise, daß er der Probe (E) mittels des zweiten sphärischen Spiegels (M$_8$) zugeordnet ist, so daß auf der Oberfläche der Probe (E) ein hinsichtlich Asigmatismusfehlern korrigierter Leuchtfleck erhalten wird.

**2.** Vorrichtung nach Anspruch 1, dadurch gekennzeichnet, daß sie einen ersten reflektierenden Spiegel (R$_3$) in dem optischen Weg zwischen dem Spalt des Monochromators und dem ersten sphärischen Spiegel und einen zweiten reflektierenden Spiegel (R4) in dem optischen Weg zwischen dem zweiten sphärischen Spiegel (M$_8$) und der Probe enthält.

FIG.1

FIG.2

EP 0 267 634 B1

FIG.3

FIG.5

FIG.4